**Europäisches Patentamt**

**European Patent Office**

**Office européen des brevets**

(19)

(11) Veröffentlichungsnummer: **0 150 232**
A1

(12)
# EUROPÄISCHE PATENTANMELDUNG

(21) Anmeldenummer: **84100810.5**

(22) Anmeldetag: **26.01.84**

(51) Int. Cl.⁴: **B 25 J 15/04**, B 23 K 11/36

(43) Veröffentlichungstag der Anmeldung: **07.08.85**
**Patentblatt 85/32**

(84) Benannte Vertragsstaaten: **AT DE FR GB IT SE**

(71) Anmelder: **Wilhelm Karmann GmbH, Karmannstrasse 1, D-4500 Osnabrück (DE)**

(72) Erfinder: **Wortmann, Johannes, Brüggereschweg 26, D-4504 Georgsmarienhütte 3 (DE)**

(74) Vertreter: **Patentanwälte Schulze Horn und Hoffmeister, Goldstrasse 36, D-4400 Münster (DE)**

(54) Verfahren zum Betreiben von Industrierobotern sowie Industrieroboter zur Durchführung dieses Verfahrens.

(57) Verfahren zum Betreiben von Industrierobotern, die an einem Arm (3) ein Werkzeug (1) tragen, wobei nach Durchführung bestimmter Arbeiten das dafür bestimmte Werkzeug mit den dazugehörigen Versorgungsleitungen (4) verbunden bleibt, abgelegt, dann von dem Roboterarm gelöst und ein weiteres Werkzeug mit den dazugehörigen Versorgungsleitungen mit dem Roboterarm verbunden und dann aufgenommen wird und dann die Tätigkeiten ausgeführt werden, für die das weitere Werkzeug bestimmt ist sowie ein Industrieroboter zur Durchführung dieses Verfahrens.

EP 0 150 232 A1

## Verfahren zum Betreiben von Industrierobotern sowie Industrieroboter zur Durchführung des Verfahrens

Die Erfindung betrifft ein Verfahren zum Betreiben von Industrierobotern, die an einem Arm ein Werkzeug tragen sowie einen Industrieroboter zur Durchführung dieses Verfahrens.

Industrieroboter sind insbesondere bei der Fertigung in der Automobilindustrie weit verbreitet und haben sich bewährt. Im Karosseriebau werden sie insbesondere zum Punktschweißen von Karosserieteilen oder der Karosserie eingesetzt. Der Roboterarm trägt dabei die Punktschweißzange, die über einen Computer programmgesteuert unter verschiedensten Winkeln die verschiedensten Karosseriepunkte anfährt und schweißt.

Bei den bekannten Robotern ist allerdings nachteilig, daß sie nur mit einem bestimmten Werkzeug bzw. einer bestimmten Punktschweißzange ausgerüstet sind und daher nur eine begrenzte Anzahl von Arbeitsgängen durchführen können bzw. lediglich eine von der Geometrie der Zange herzuleitende Anzahl von Schweißungen ausführen können.

Es ist also erforderlich, eine große Anzahl von Robotern mit verschiedensten Werkzeugen oder Punktschweißzangen einzusetzen. Dies ist zwar nicht so sehr nachteilig, wenn ein Fließband oder dergleichen Fertigungsstraße nur mit kurzen Taktzeiten arbeitet, obwohl die Anzahl der zu verwendenden Roboter damit stark ansteigt, aber bei Fertigungen mit geringer Stückzahl, bei denen lange Arbeitstakte vorliegen, wären die verwendeten Robotor nur zeitweise ausgelastet und damit unwirtschaftlich.

Nachteilig ist weiterhin, daß ein Robotor mit einem bestimmten Werkzeug bei Fertigung verschiedenster Teile (Teilevielfalt) und im Mixed-Betrieb nicht oder nicht wirtschaftlich einsetzbar ist.

Es ist demgegenüber Aufgabe der Erfindung, einen Industrieroboter und ein Verfahren zum Betreiben desselben zu schaffen, bei denen die vorgenannten Nachteile nicht mehr auftreten und die es ermöglichen, nicht nur bei der Fertigung von geringen Stückzahlen wirtschaftlich eingesetzt zu werden, sondern die auch verschiedene Arbeitsgänge ausführen können, also auch bei Teilevielfalt und im Mixed-Betrieb einsetzbar sind.

Diese Aufgabe soll weiterhin nicht nur wirtschaftlich, sondern auch betriebssicher unter den Bedingungen des rauhen Alltagsbetriebes unter Beibehaltung der für den Robotereinsatz bekannten hohen Fertigungsgenauigkeiten lösbar sein.

Die Erfindung soll weiterhin erstmalig den Einsatz von Robotern überall dort ermöglichen, wo dieser aufgrund von langen Taktzeiten oder anderer Gegebenheiten sonst nicht möglich oder wirtschaftlich nicht sinnvoll ist und der Roboter soll dafür geringste Totzeiten aufweisen, d. h. solche Zeiten, in denen keine eigentliche Arbeit geleistet wird, also z. B. keine Punktschweißungen vorgenommen werden.

Die erfindungsgemäße Lösung soll dabei weiterhin einfach und mit geringen Investitionen durchführbar sein.

Diese Aufgabe wird erfindungsgemäß dadurch gelöst, daß nach Durchführung bestimmter Arbeiten das dafür bestimmte Werkzeug mit den dazugehörigen Versorgungsleitungen verbunden bleibt, abgelegt, dann von dem Roboterarm gelöst und ein weiteres Werkzeug mit den dazugehörigen Versorgungsleitungen mit dem Roboterarm verbunden und dann aufgenommen wird und dann die Tätigkeiten ausgeführt werden, für die das weitere Werkzeug bestimmt ist.

Zur Erhöhung der Betriebssicherheit kann vorteilhaft das Werkzeug nach dem Ablegen und vor der Trennung vom Roboterarm in seiner Position fixiert werden und diese Fixierung wird erst gelöst, wenn es zur nächsten Aufnahme erneut mit dem Roboterarm verbunden ist.

Um die Verbindung von Roboterarm und Werkzeug zu erleichtern und die genaue Positionierung sicher einzustellen, wird vorteilhaft der Roboterarm vor Herstellung einer festen Verbindung mit dem abgelegten Werkzeug während der letzten Annäherungsphase durch das Werkzeug justiert.

Der Industrieroboter zur Durchführung dieses Verfahrens weist erfindungsgemäß einen Arm auf, mit dem ein Werkzeug lösbar verbunden werden kann, wobei vorteilhaft der Arm eine Anschlußplatte mit Spannbacken aufweist, die radial gegen Spannklötze einer Anschlußplatte des Werkzeugs anlegbar sind.

Zur automatischen Justierung in der letzten Annäherungsphase kann vorteilhaft die Anschlußplatte des Werkzeugs einerseits und die Anschlußplatte des Arm andererseits zwei Führungsöffnungen und zwei dazu passenden -bolzen aufweisen, wobei die Bolzen in die Öffnungen eindringen und formschlüssig die Endpositionierung vornehmen.

Die Spannbacken sind vorteilhaft in Keilnuten geführt und weisen an ihren radial äußeren Enden eine Hinterschneidung auf, die eine Krümmung entsprechend dem Umfang ihrer Spannstellung besitzt und die Spannklötze weisen ihrerseits derartige Hinterschneidungen auf, daß die Enden der Spannbacken in die Hinterschneidungen einzugreifen vermögen und das Spreizen der Spannbacken zugleich ein Anpressen der Anschlußplatten gegeneinander bewirkt.

Zur Aufnahme des abzulegenden Werkzeugs ist erfindungsgemäß ein Magazin mit einer Spannvorrichtung für das Werkzeug vorgesehen, wobei beidseitig oberhalb der Mitte der Anschlußplatte des Werkzeugs anlegbare Klemmbacken vorhanden sind, die über ein gemeinsames Hebelwerk bewegt werden. In einer weiteren Ausgestaltung der Erfindung kann das Magazin auch in seiner Basis einen Bolzen aufweisen, der in eine Nut im Umfang der Anschlußplatte eingreift.

Vorteilhaft kann das Magazin oberhalb oder neben dem werkstückseitig gegebenen Arbeitsbereich des Roboterarms auf einem Stützgerüst angeordnet sein.

Ersichtlicherweise bietet das erfindungsgemäße Verfahren bzw. der erfindungsgemäße Roboter bei wenig Aufwand eine Fülle von Vorteilen, so daß von einer idealen Lösung der anstehenden Probleme gesprochen werden kann. Dabei ist insbesondere zu berücksichtigen, daß der Werkzeugwechsel bzw. der Wechsel von einer Schweißzange zur anderen innerhalb kürzester Zeit ohne jegliche manuelle Beteiligung erfolgt.

Im folgenden wird ein Ausführungsbeispiel der Erfindung anhand von Zeichnungen näher beschrieben. Es zeigen:

Figur 1 einen Industrieroboter mit einer Schweißzange und ein Magazin mit einer weiteren Schweißzange neben dem Arbeitsbereich des Roboterarmes,

Figur 2 eine Karosserie und zwei diese schweißende Roboter mit über Kopf angeordneten Magazinen,

Figur 3 perspektivisch die Anschlußplatten eines Roboterarms und einer Schweißzange und

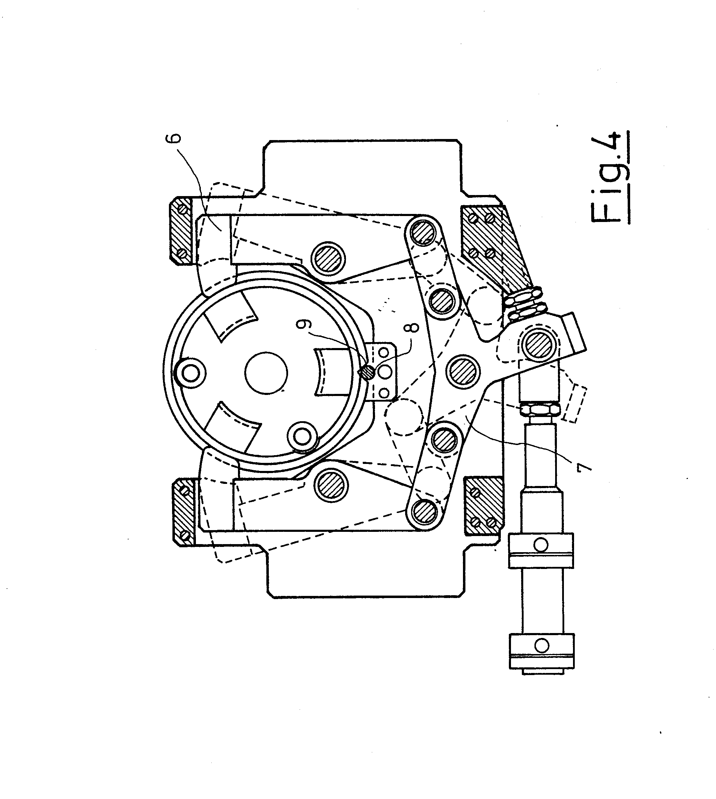

Figur 4 die Ansicht eines in ein Magazin eingesetzten Werkzeugs, welches dort arretiert ist, wobei die Arretierung in geöffneter Stellung gestrichelt dargestellt ist.

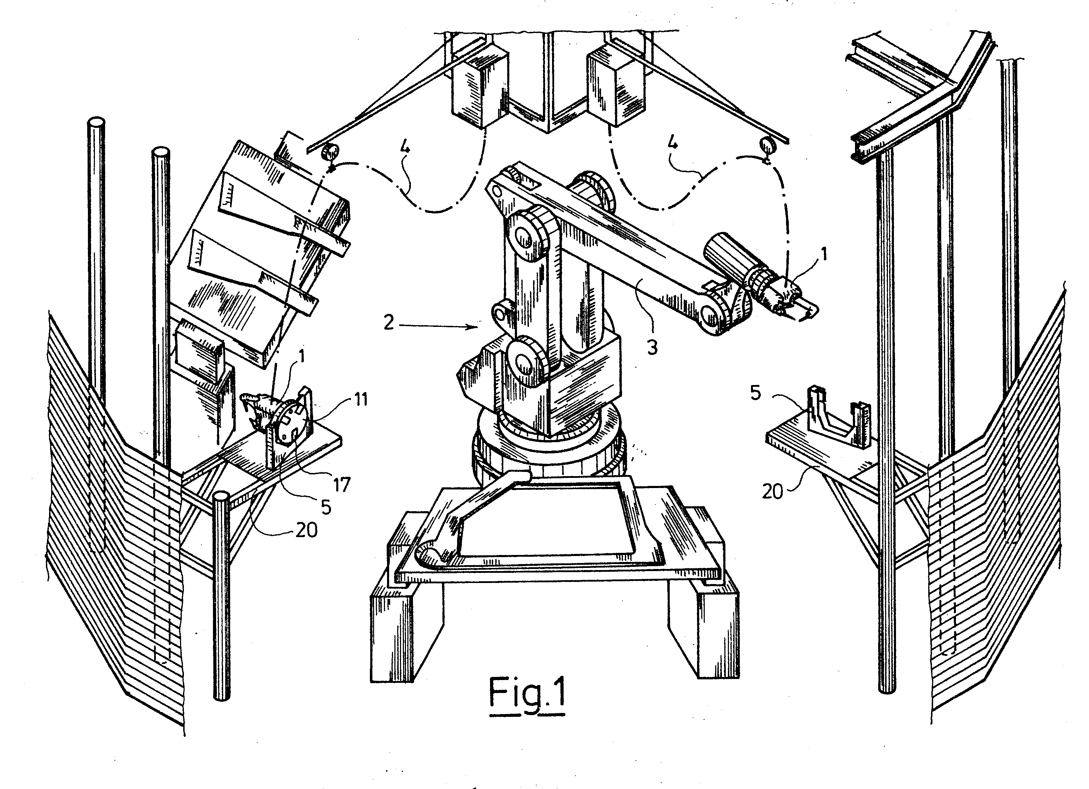

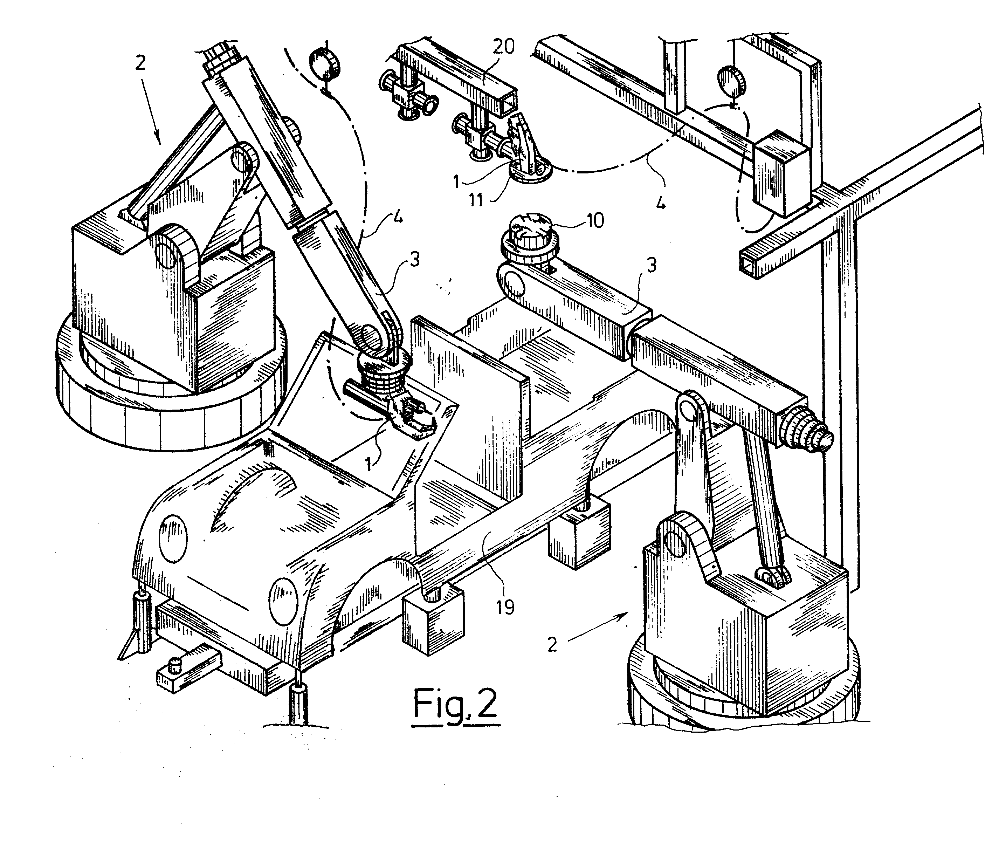

Gemäß den Figuren 1 und 2 kann der erfindungsgemäße Roboter entweder von einer zentralen Position aus ein oder mehrere Werkstücke bearbeiten oder ein oder mehrere Roboter arbeiten aus der Seitenposition heraus. Der allgemein mit 2 bezeichnete Roboter weist einen Arm 3 auf, welcher das Werkzeug, d. h. in dem Ausführungsbeispiel eine Schweißzange, trägt. Die Schweißzange bzw. das Werkzeug 1 wird über Versorgungsleitungen 4 mit den benötigten Medien, d. h. z. B. mit Strom, Wasser und Preßluft versorgt.

Es ist erfindungswesentlich, daß die Versorgungsleitungen 4 auch während der Ablage an dem Werkzeug 1 befestigt bleiben, so daß für den Werkzeugwechsel ledig-lich eine mechanische Ankopplung erforderlich ist.

Ein nicht benötigtes Werkzeug 1 wird in einem Magazin 5 gehaltert, welches auf einem Gerüst 20 bzw. über Kopf an einer entsprechenden Tragkonstruktion getragen wird.

Die Konstruktion der entsprechenden Roboter sowie die Gestaltung der Bearbeitungsplätze bzw. der Transport der Werkstücke oder Karosserien sind dem Fachmann geläufig und brauchen daher nicht gesondert beschrieben werden.

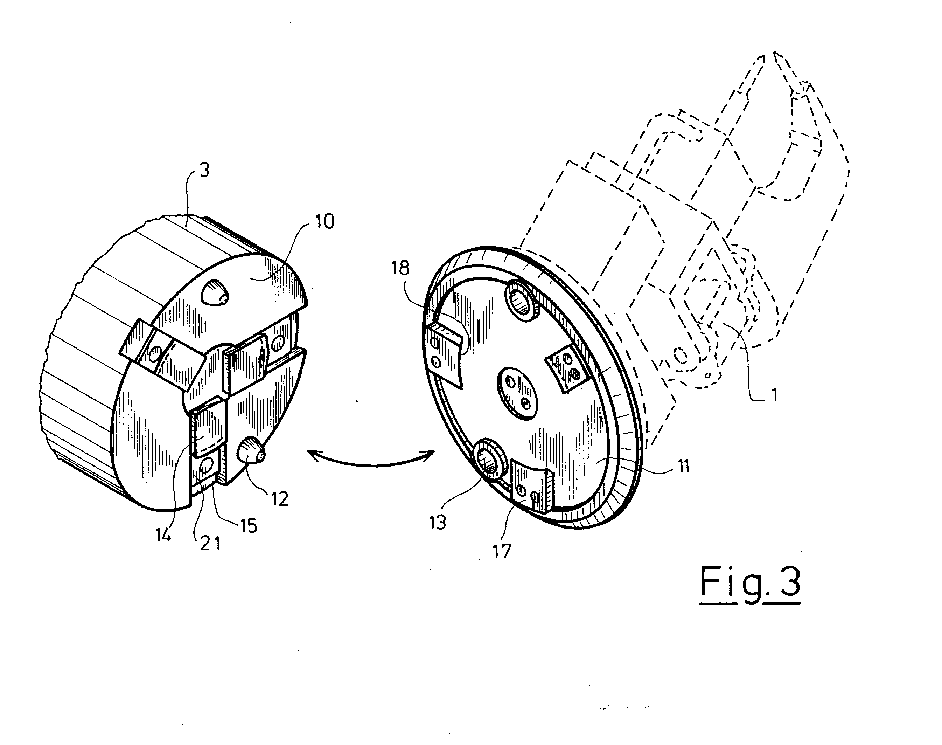

Erfindungswesentlich ist die Ankoppelung des Roboterarms 3 an eine Zange als beispielhaftes Werkzeug, wobei die Ankoppelung über zwei Anschlußplatten 10 (am Arm befestigt) und 11 (an der Zange befestigt) erfolgt. Die Anschlußplatte 10 weist dabei zwei Bolzen 12 auf, die bei der Annäherung in Öffnungen 13 in der Anschlußplatte 11 eingreifen. Da die Bolzen abgerundet sind und die Öffnungen 13 ein entsprechendes Futter aufweisen, wird beim Einführen der Bolzen in die Öffnungen eine automatische Justierung des Roboterarmes gegenüber der Zange vorgenommen, so daß nicht nur kleinste Abweichungen korrigiert werden, sondern insbesondere der auf Bruchteile von Millimetern exakte Sitz gewährleistet wird. Gemäß Figur 3 werden dabei zwei Bolzen und zwei Öffnungen verwendet, um einerseits auch winkelgerecht zu justieren, andererseits aber eine Überbestimmung zu vermeiden.

In der Anschlußplatte 10 sind Keilnuten 15 vorhanden, in denen radial nach außen Spannbacken 14 beweglich sind. Die Spannbacken 14 weisen an ihren äußeren Enden Hinterschneidungen 21 auf, wobei die äußeren Kanten und die Hinterschneidungen derart gekrümmt sind, daß sie in Spannstellung auf dem Umfang eines Kreises liegen.

Die Anschlußplatte 11 des Werkzeugs 1 wiederum weist drei Spannklötze 17 auf, die ihrerseits keilförmige Hinterschneidungen 18 besitzen, die nach innen weisen. Die Krümmung der Hinterschneidungen 18 entspricht der Krümmung der Hinterschneidungen 21 und nach Anlegen der Anschlußplatten aneinander fahren die Spannbacken aus und arretieren die Zange 1 nach Anlage der Hinterschneidungen 18 und 21 aneinander. Dabei wird durch die Hinterschneidungen nicht nur ein feste Klemmung, sondern auch eine Pressung der Anschlußplatten 10 und 11 aneinander gewährleistet.

Das Magazin 5 für die Aufnahme und Lagerung der Zange 1 weist einen Rahmen 22 auf, an dem die Klemmbacken 6 sowie das diese bewegende Hebelwerk 7 angebracht sind. Die Klemmbacken 6 greifen seitlich oberhalb der Mitte an der Anschlußplatte 11 an und zusammen mit einer Lagerung an der Basis ist damit nach Betätigung des Hebelwerks 7 eine Dreipunkt-Arretierung gegeben. Die Lagerung an der Basis besteht aus einem Bolzen 8, welcher in eine Keilnut 9 am Umfang der Anschlußplatte 11 eingreift.

Der erfindungsgemäße Industrieroboter arbeitet jetzt wie folgt:

Nach Durchführung bestimmter Schweißarbeiten wird die Zange in einem Magazin abgelegt, welches außerhalb des durch das Werkstück bedingten Arbeitsbereiches des Roboters angeordnet ist und dort durch die Klemmbacken 6 arretiert. Daraufhin wird der Bearbeitungsarm des Roboters gelöst und schwenkt zu einem neuen Werkzeug in der auch in den Arbeitsphasen üblichen Art. Nach Annäherung wird der Arm mit dem Werkzeug verbunden und daraufhin löst das Magazin die Arretierung durch Betätigung des Hebelwerks 7. Das Werkzeug wird dann aus dem Magazin entnommen und ein neuer Arbeitszyklus beginnt.

Patentansprüche:

1. Verfahren zum Betreiben von Industrierobotern, die an einem Arm ein Werkzeug tragen, dadurch gekennzeichnet, daß nach Durchführung bestimmter Arbeiten das dafür bestimmte Werkzeug mit den dazugehörigen Versorgungsleitungen verbunden bleibt, abgelegt, dann von dem Roboterarm gelöst und ein weiteres Werkzeug mit den dazugehörigen Versorgungsleitungen mit dem Roboterarm verbunden und dann aufgenommen wird und dann die Tätigkeiten ausgeführt werden, für die das weitere Werkzeug bestimmt ist.

2. Verfahren nach Anspruch 1, dadurch gekennzeichnet, daß das Werkzeug nach dem Ablegen und vor der Trennung vom Roboterarm in seiner Position fixiert wird und diese Fixierung gelöst wird, wenn es zur nächsten Aufnahme erneut mit dem Roboterarm verbunden ist.

3. Verfahren nach Anspruch 2, dadurch gekennzeichnet, daß der Roboterarm vor der Herstellung einer festen Verbindung mit dem abgelegten Werkzeug während der letzten Annäherungsphase durch das Werkzeug justiert wird.

4. Industrieroboter zur Durchführung des Verfahrens nach einem der Ansprüche 1 bis 3, dadurch gekennzeichnet, daß er einen Arm (3) aufweist, mit dem ein Werkzeug (1) lösbar verbunden werden kann.

5. Industrieroboter nach Anspruch 4, dadurch gekennzeichnet, daß der Arm (3) eine Anschlußplatte (10) mit Spannbacken (14) aufweist, die radial gegen Spannklötze (17) einer Anschlußplatte (11) des Werkzeugs (1) anlegbar sind.

6. Industrieroboter nach Anspruch 5, dadurch gekennzeichnet, daß die Anschlußplatte (11) des Werkzeugs
(1) einerseits und die Anschlußplatte (10) des Arms
(3) andererseits zwei Führungsöffnungen (13) und
zwei dazu passende -bolzen (12) aufweist, wobei in
der Annäherungsphase die Bolzen (12) in die Öffnungen (13) eindringen und formschlüssig die Endpositionierung vornehmen.

7. Industrieroboter nach Anspruch 5, dadurch gekennzeichnet, daß die Spannbacken (14) in Keilnuten (15)
geführt werden.

8. Industrieroboter nach Anspruch 7, dadurch gekennzeichnet, daß die Spannbacken (14) an ihren radial
äußeren Enden eine Hinterschneidung (21) aufweisen,
die eine Krümmung entsprechend dem Umfang ihrer
Spannstellung aufweist und die Spannklötze (17)
eine derartige Hinterschneidung (18) besitzen, daß
die Enden der Spannbacken (14) in die Hinterschneidungen (18) einzugreifen vermögen und das Spreizen
der Spannbacken (14) zugleich ein Anpressen der
Anschlußplatte (10) gegen die Anschlußplatte (11)
bewirkt.

9. Industrieroboter nach Anspruch 4, dadurch gekennzeichnet, daß er ein Magazin (5) für das abzulegende
Werkzeug (1) aufweist, das mit einer Spannvorrichtung (6 - 8) für dieses versehen ist.

10. Industrieroboter nach Anspruch 9, dadurch gekennzeichnet, daß das Magazin (5) beidseitig oberhalb
der Mitte der Anschlußplatte (11) des Werkzeugs (1)
an diese anlegbare Klemmbacken (6) aufweist, die
über ein gemeinsames Hebelwerk (7) bewegbar und
arretierbar sind.

11. Industrieroboter nach Anspruch 10, dadurch gekennzeichnet, daß das Magazin (5) in seiner Basis einen Bolzen (8) aufweist, der in eine Nut im Umfang der Anschlußplatte (11) eingreift.

12. Industrieroboter nach einem der Ansprüche 4 bis 11, dadurch gekennzeichnet, daß das Magazin (5) oberhalb oder neben dem werkstückseitig gegebenen Arbeitsbereich des Roboterarms (3) auf einem Stützgerüst (20) angeordnet ist.

Fig.1

Fig.2

0150232

Fig. 3

Fig.4

# EUROPÄISCHER RECHERCHENBERICHT

Europäisches Patentamt

0150232

EP 84 10 0810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 852 502 (REGIE NATIONALE DES USINES RENAULT) <br> * Patentansprüche 1,2; Seite 9, Zeile 33 - Seite 10, Zeile 6; Seite 11, Zeile 15 - Seite 12, Zeile 6; Seite 14, Zeile 30 - Seite 15, Zeile 4; Seite 16, Zeilen 12-15 * | 1-4,12 | B 25 J 15/04 <br> B 23 K 11/36 |
| Y | | 5,6,8 | |
| Y | DE-A-2 647 633 (BAYER) <br> * Seite 12, Zeilen 1-28 * | 5,6,8 | |
| A | DE-B-1 175 169 (COMMISSARIAT A L'ENERGIE ATOMIQUE) <br> * Patentansprüche 1,2; Spalte 3, Zeilen 25-30 * | 5 | |
| A | EP-A-0 043 153 (COMAU) | | RECHERCHIERTE SACHGEBIETE (Int. Cl. 3) <br> B 25 J <br> B 23 K <br> B 23 B |
| A | GB-A- 781 465 (KENWARD) <br><br> * Seite 6, Zeilen 120-128 * | 1,4,5,12 | |

Der vorliegende Recherchenbericht wurde für alle Patentansprüche erstellt.

| Recherchenort <br> DEN HAAG | Abschlußdatum der Recherche <br> 17-09-1984 | Prüfer <br> LAMMINEUR P.C.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82